# EUROPÄISCHE PATENTANMELDUNG

(11) **EP 0 621 423 A1**
(43) Veröffentlichungstag der Anmeldung: **26.10.1994**
(21) Anmeldenummer: 94107000.5
(22) Anmeldetag: 04.05.1994
(51) Int. Cl.: F16K 1/10, F16K 37/00, F16K 27/02

(54) **Schrägsitzventil**

(30) Priorität: 09.11.1993 DE 9317131 U
(71) Anmelder: RAFELD KUNSTSTOFFTECHNIK GmbH & Co. KG, 87640 Ebenhofen (DE)
(72) Erfinder: Rafeld, Karl, D-87640 Ebenhofen (DE)
(74) Vertreter: Kern, Wolfgang, Dipl.-Ing.

(57) **Zusammenfassung**

Die Erfindung betrifft ein Schrägsitzventil für Rohrleitungen, insbesondere für die Unterputzverlegung, mit einem aus Kunststoff bestehenden Gehäuse (12), in das ein metallenes Anschlußstück (4) eingebaut ist, das mit einem Gewinde (13) zum Einschrauben des Ventilabsperrorgans zur Steuerung des Ventildurchflusses versehen ist, wobei das Anschlußstück und der Ventilsitz (3) zwei getrennte Bauteile sind und der Ventilsitz aus Metall besteht.

In der Wandung auf der Druckseite des Ventils und vor seinem Schließorgan ist eine zusätzliche Bohrung (8) vorgesehen, die für den Fall, daß das Ventil als Rückschlagventil benutzt wird, als Revisonsbohrung dient.

## Beschreibung

Die Erfindung betrifft ein Schrägsitzventil für Rohrleitungen, insbesondere solche für die Unterputzverlegung, mit einem aus Kunststoffbestehenden Gehäuse, in das ein metallenes Anschlußstück eingebaut ist, das mit einem Gewinde zum Einschrauben des Ventilabsperrorgans zur Steuerung des Ventildurchflusses versehen ist, wobei das Anschlußstück und der Ventilsitz zwei getrennte Bauteile sind und der Ventilsitz aus Metall besteht.

Derartige Ventile werden in zunehmendem Maße bei der Verlegung von insbesondere aus Kunststoffbestehenden Wasserleitungsrohren und in diesem Zusammenhang auch Heizungswasserrohren eingesetzt, die unterputz bzw. im Mauerwerk von Decken und Wänden von Gebäuden liegen (DE-GM 90 03 116). In diesem Zusammenhang ist auch bereits vorgeschlagen worden, das metallene Anschlußstück und den Ventilsitzkörper als zwei getrennte Bauteile auszubilden, die aus Metall bestehen und bei der Herstellung des Absperrventils im Spritzgießverfahren in den Kunststoff des Ventilgehäuses eingebettet werden (DE-GM 92 09 398).

Die Aufgabe der Erfindung besteht darin, das Ventil der eingangs genannten Art so zu verbessern, daß es auch als Rückschlagventil eingesetzt werden kann.

Diese Aufgabe wird erfindungsgemäß dadurch gelöst, daß in der Wandung auf der Druckseite des Ventils und vor seinem Schließorgan eine zusätzliche Bohrung vorgesehen ist, die für den Fall, daß das Ventil als Rückschlagventil benutzt wird, als Revisionsbohrung dient.

Durch diese Konstruktion ist die Möglichkeit gegeben, die Dichtigkeit des Rückschlagentils bzw. seines den Rücklauf sperrenden Ventilelements zu überprüfen.

Zu diesem Zweck hat es sich besonders bewährt, die Revisionsbohrung mit einem metallenen Gewindeeinsatz zu versehen, der beim Spritzgießen des Ventils mit in den Kunststoff der Ventilwandung eingebettet wird. Dieser Gewindeeinsatz läßt sich zweckmäßigerweise durch einen einschraubbaren Deckel verschließen, wenn die Revisionsbohrung nicht benötigt wird. Andererseits läßt sich in den Gewindeeinsatz ein Prüfgerät zur Ermittlung der Dichtigkeit des Ventils einschrauben.

Die Lage der Revisionsbohrung ist zweckmäßigerweise so gewählt, daß für den Fall der Undichtigkeit des Ventils Leckflüssigkeit durch die Revisionsbohrung abfließen kann, was bedeutet, daß die Revisionsbohrung im eingebauten Zustand des Ventils üblicherweise nach unten gerichtet ist. Dies bedeutet, daß die Revisionsbohrung in der Wandung des Ventils an einer Stelle ausgebildet ist, die dem Ventilsitz gegenüberliegt.

Die Erfindung wird nachfolgend anhand des in der Zeichnung dargestellten Ausführungsbeispiels näher erläutert. In der Zeichnung zeigen:
- Fig. 1: eine Längsschnittansicht des Schrägsitzventils,
- Fig. 2: eine schematische Frontansicht des Ventils von Fig. 1 von rechts gesehen und
- Fig. 3: eine schematische Ansicht des Ventils von Fig. 1 von unten gesehen.

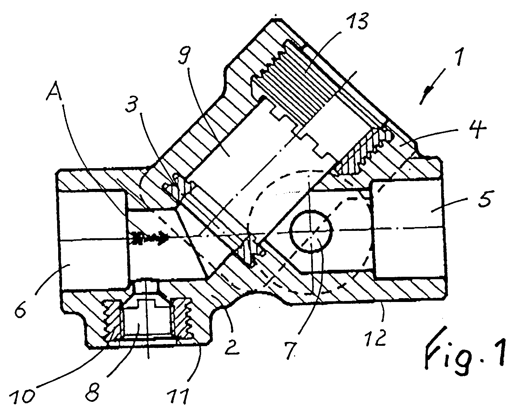

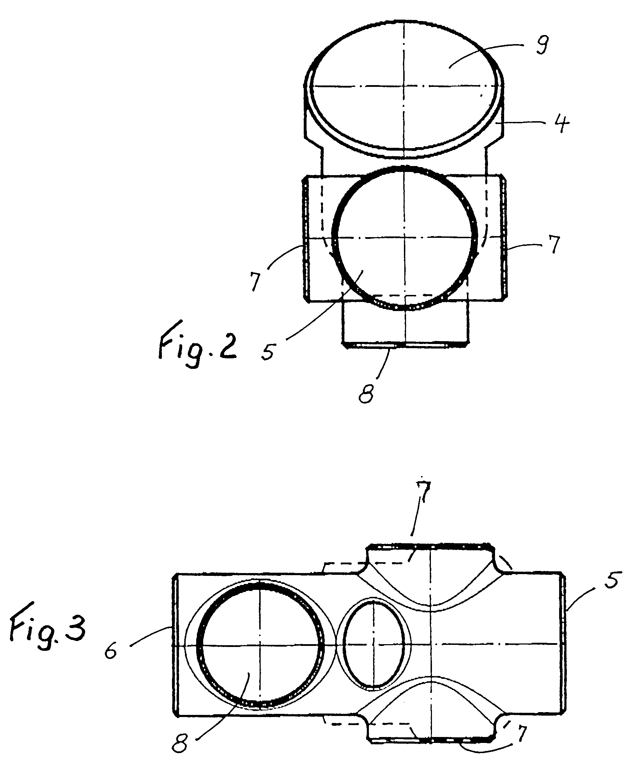

Das in den Figuren 1 - 3 dargestellte Schrägsitzventil 1 soll alternativ auch als Rückschlagventil Verwendung finden und weist ein aus Kunststoffbestehendes Gehäuse 12 auf, das im Einbauzustand des Ventils in einem Wasserleitungssystem den Wasserdurchfluß von der Druckseite 6 in Richtung des Pfeils A zur Abflußseite 5 lenkt. Mit Hilfe eines nicht dargestellten Ventilabsperrorgans, das in das mit dem Innengewinde 13 versehene Anschlußstück 4 einschraubbar ist, läßt sich der Durchfluß steuern.

Für den Fall, daß das Absperrorgan, dem ein Ventilsitz 3 in Form eines in das Kunststoffmaterial des Ventilgehäuses 12 eingebettenen Metallrings zugeordnet ist, als Rückschlagventilelement wirken soll, das Schrägsitzventil also die Funktion eines Rückschlagventils haben soll, das mit einem klappenförmigen oder kugelförmigen, nicht dargestellten Schließelement versehen ist, dient die in der Gehäusewandung 2 angeordnete Revisionsbohrung 8 zur Kontrolle der Arbeitsweise bzw. der Dichtungswirkung des Rückschlagventils.

Die Revisionsbohrung 8, die in einem dickeren Wandteil 11 der Gehäusewandung 2 an einer Stelle ausgebildet ist, die dem Ventilsitz 3 gegenüberliegt, ist mit einem metallenen Gewindeeinsatz 10 ausgestattet, der wie der Ventilsitz 3 in das Kunststoffmaterial der Wandung eingebettet ist.

Wird das Schrägsitzventil 1 als normales Absperrventil verwendet, so bleibt die Revisionsbohrung verschlossen. Zu diesem Zweck läßt sich ein nicht dargestellter Verschlußdeckel in den Gewindeeinsatz 10 einschrauben.

Im Falle der Verwendung als Rückschlagventil kann in den Gewindeeinsatz 10 ein ebenfalls nicht dargestelltes Prüfgerät eingeschraubt werden, das zur Ermittlung der Dichtigkeit des Ventils dient. Falls nämlich das Sperrelement des Rückschlagventils, also beispielsweise eine Kugel oder eine Klappe, die unter dem Druck des in Richtung des Pfeils A strömenden Wassers normalerweise offengehalten werden, bei im Abfluß 5 auftretenden Gegendruck schließt, sollte das Ventilelement jegliches Zurückströmen des Wassers in den Vordruckbereich 6 des Ventils verhindern. Geschieht dies aufgrund von vorhandenen Undichtigkeiten nicht, so könnte dies mit Hilfe des in die Revisionsbohrung 8 eingeschraubten Prüfgerätes festgestellt werden. Gegebenenfalls müßte dann der in die Schrägsitzbohrung 9 eingeschraubte Rückschlagventilkörper ausgetauscht werden.

Das Ventilgehäuse 12 weist außerdem in Strömungsrichtung des Wassers hinter dem Absperrelement des Ventils zwei seitliche Entleerungsöffnungen 7 auf, mit Hilfe derer nach dem Schließen des Absperrventils die Rohrleitung unterhalb des Ventils entleert werden könnte.

Das Ventilgehäuse 12 bildet zusammen mit den eingebauten metallenen Gewindeeinsätzen 10, 13 sowie dem metallenen Ventilsitz 3 einen einteiligen Spritzgußkörper, der sich unter Verwendung bekannter Spritzgußtechniken herstellen läßt, wobei die genannten Anschlußstücke in dem sie umgebenden Kunststoffmaterial fest verankert werden.

Im übrigen ist die Lage der Revisionsbohrung 8 in der Wandung 2 des Ventilgehäuses 12 so gewählt, daß dann, wenn das Schrägsitzventil bzw. Rückschlagventil in das Rohrleitungssystem eingebaut ist, die Revisionsbohrung 8 nach unten weist, so daß eventuell infolge einer vorhandenen Undichtigkeit durch den Ventilsitz hindurchtretendes Wasser ablaufen kann.

## Patentansprüche

1. Schrägsitzventil für Rohrleitungen, insbesondere solche für die Unterputzverlegung, mit einem aus Kunststoffbestehenden Gehäuse, in das ein metallenes Anschlußstück eingebaut ist, das mit einem Gewinde zum Einschrauben des Ventilabsperrorgans zur Steuerung des Ventildurchflusses versehen ist, wobei das Anschlußstück und der Ventilsitz zwei getrennte Bauteile sind und der Ventilsitz aus Metall besteht, **dadurch gekennzeichnet,** daß in der Wandung (2) auf der Druckseite (6) des Ventils (1) und vor seinem Schließorgan eine zusätzliche Bohrung (8) vorgesehen ist, die für den Fall, daß das Ventil als Rückschlagventil benutzt wird, als Revisionsbohrung dient.

2. Ventil nach Anspruch 1, **dadurch gekennzeichnet**, daß die Revisionsbohrung (8) mit einem metallenen Gewindeeinsatz (10) versehen ist.

3. Ventil nach Anspruch 2, **dadurch gekennzeichnet,** daß in den Gewindeeinsatz (10) ein Verschlußdeckel einschraubbar ist.

4. Ventil nach Anspruch 3, **dadurch gekennzeichnet,** daß der Verschlußdeckel mit einem Schauglas versehen ist.

5. Ventil nach Anspruch 2, **dadurch gekennzeichnet**, daß in den Gewindeeinsatz (10) ein Prüfgerät zur Ermittlung der Dichtigkeit des Rückschlagventils im geschlossenen Zustand einschraubbar ist.

6. Ventil nach einem der Ansprüche 1 - 5, **dadurch gekennzeichnet**, daß die Revisionsbohrung (8) in der Wandung (2) an einer Stelle ausgebildet ist, die dem Sitz (3) des Schrägsitzventils gegenüberliegt.
